# FASCICULE DE BREVET EUROPEEN

(11) **EP 1 564 166 B1**
(45) Date de publication et mention de la délivrance du brevet: **14.06.2006**
(21) Numéro de dépôt: 04350001.6
(22) Date de dépôt: 10.02.2004
(51) Int. Cl.: B65G 39/14

(54) **Dispositif de maintien pour un rouleau de convoyeur à bande ou à tasseaux porteurs**
Stützvorrichtung für eine Rolle eines Bandförderers
Support for a roll of a belt conveyor

(43) Date de publication de la demande: 17.08.2005
(73) Titulaire: SOCIETE FINANCIERE DE GESTION, 59100 Roubaix (FR)
(72) Inventeur: Lacroix, Olivier, 76540 Limpiville (FR); Simoens, Herve, 59300 Marcq en Baroeul (FR)
(74) Mandataire: Tournel, Jean Louis

(56) Documents cités:
- US-A- 2 695 701

## Description

L'invention se rapporte à un dispositif de maintien pour un rouleau de convoyeur à bande ou à tasseaux porteurs. Elle se rapporte également au convoyeur équipé dudit dispositif.

Le transfert de produits, notamment en vrac d'un endroit vers un autre, peut être réalisé avec différents appareils dont le choix dépend de différents paramètres tels que la distance du transport, le volume à transporter par unité de temps, etc.

Classiquement un convoyeur à bande comprend une bande sans fin portée par une succession de rouleaux supportés par un châssis.

Lorsque ces convoyeurs à bande sans fin transportent des produits en vrac, la partie active de la bande doit être conformée en V ou en U afin de constituer une sorte de rigole ou auge contenant le produit tout au long de son parcours.

Couramment, pour obtenir cette forme en V ou en U, la bande circule sur des ensembles de rouleaux porteurs répartis le long du parcours et transversalement au dit parcours.

La position géométrique d'un ensemble définit la concavité de la bande et donc la génératrice souhaitée.

Généralement, pour cet ensemble de guidage, on fait appel à un rouleau central horizontal et à deux ou plusieurs rouleaux latéraux inclinés par rapport à l'horizontal pour relever les bords de la bande sans fin.

L'accès aux différents rouleaux n'est pas aisé et dans le cas de matériaux pondéreux, la présence de poussières accroît nécessairement les opérations de maintien.

Ces arrêts sont très longs car il faut démonter les pattes qui maintiennent l'axe du rouleau pour pouvoir dégager le rouleau (voire par exemple US 2695701).

L'invention se propose d'apporter une solution aux problèmes évoqués notamment ci dessus.

A cet effet, un dispositif de maintien pour un rouleau de convoyeur est prévu tel que défini dans la revendication 1.

L'invention se rapporte également au convoyeur équipé dudit dispositif de maintien.

L'invention sera bien comprise à l'aide de la description ci-après faite à titre d'exemple non limitatif en regard du dessin qui représente schématiquement :
FIG 1 : Vue en coupe transversale d'un exemple de convoyeur.
FIG 2 : Vue latérale de la figure 1
FIG 3 : Vue d'un dispositif de maintien d'un rouleau en position active.
FIG 4 : Vue d'un dispositif de maintien d'un rouleau en position inactive.
FIG 5 : Une variante d'un dispositif de maintien d'un rouleau.

En se reportant au dessin on voit un convoyeur 1 à bande ou à tasseaux porteurs. Classiquement un convoyeur 1 comprend :
portée par un châssis 2, une surface 3 sans fin portante se déplaçant sur une surface 4 de guidage définissant une génératrice, par exemple, courbe.

La surface de guidage est par exemple réalisée par un rouleau 7.

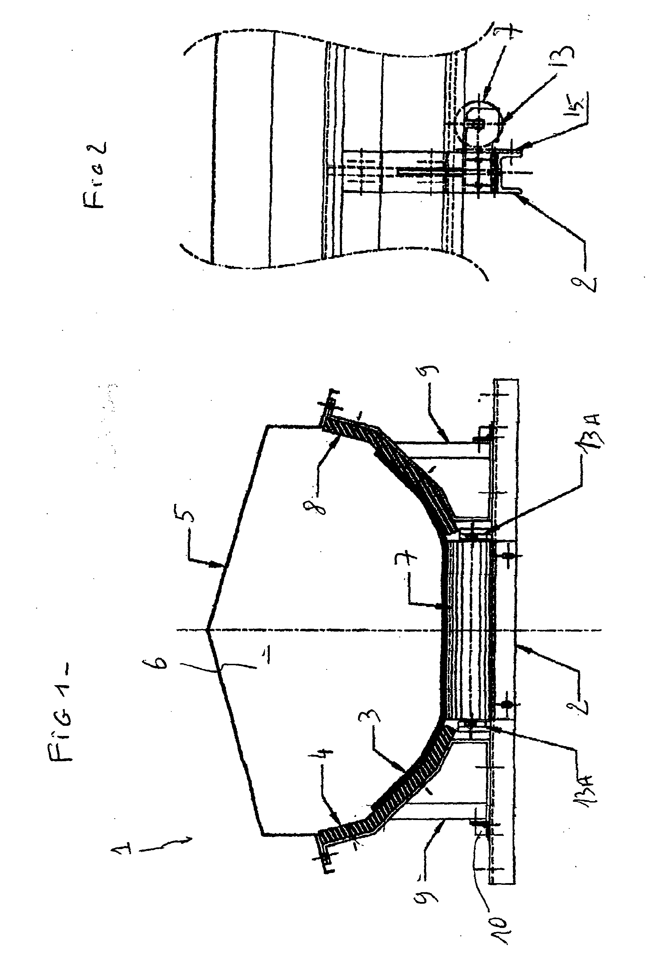

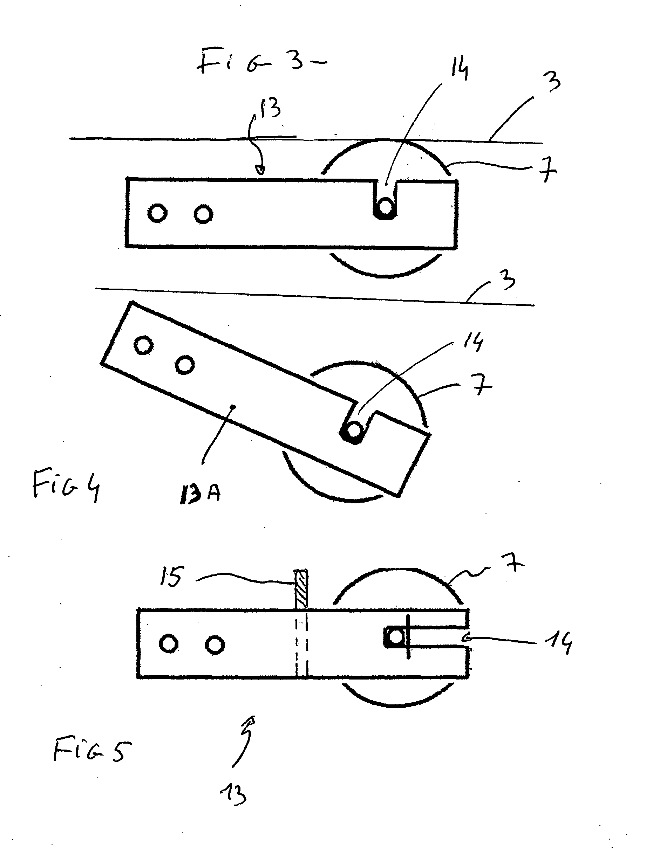

Dans l'exemple représenté FIG 1, il est monté au dessus de la bande ou surface 3 sans fin, un capot 5, éventuellement sur articulation, pour constituer un volume 6 clos.

Les bords de la surface 3 sans fin portante doivent être relevés pour former une rigole destinée à contenir le matériau en vrac déposé sur ce convoyeur.

Des tendeurs et moyens moteurs connus assurent le déplacement de la bande sans fin. Le matériau transporté se déplace dans un tunnel ouvert aux deux extrémités.

La courbure de la bande dans l'axe transversal ou la génératrice est définie par un rouleau 7 horizontal et deux surfaces 8 latérales courbes situées de part et d'autre du rouleau précité ou d'autres rouleaux.

Pour faciliter la maintenance, on a prévu que le rouleau 7 horizontal est monté sur un support 13 basculant permettant de le dégager rapidement pour le changer.

Ce support comprend, par exemple, deux joues 13A présentant chacune une entaille 14 permettant d'y glisser l'axe de rotation du rouleau horizontal.

Les entailles 14 sont prévues pour engager l'axe du rouleau depuis le dessus.

Les entailles débouchent vers le haut.

Ainsi lorsque le support est relevé, le rouleau est appliqué sous la bande.

Ce rouleau 7 ne risque pas ainsi de sortir de ces entailles.

Les entailles 14 pourraient déboucher vers l'avant ou le dessous.

La traverse qui porte le rouleau présente un dispositif 15 de protection point rentrant. Avantageusement, le support porte le dispositif 15 de protection point rentrant limitant le risque qu'un vêtement soit happé par le rouleau et la bande.

Il s'agit d'une plaque 15 venant se placer en amont du rouleau.

Ces dispositions facilitent grandement l'entretien technique.

En effet, après basculement du support, le rouleau en s'écartant de la bande sans fin devient plus accessible.

On peut par ailleurs le faire tourner librement sur son axe alors qu'auparavant ce n'était pas le cas.

Cet aspect technique fonctionne sur tout convoyeur à bande s'étendant dans un plan essentiellement horizontal ou un plan courbe.

Selon le mode de réalisation représenté, on a décrit un convoyeur à génératrice courbe.

Comme on peut le voir, chaque surface 8 latérale se prolonge latéralement au delà de la surface sur laquelle s'appuie la bande sans fin. Au moins localement, au moins une des surfaces 8 latérales est fixée au châssis par des moyens 9 de fixation rapide pour constituer une sorte de trappe d'accès dégageant rapidement une ouverture.

Par moyens de fixations rapide, on comprendra un verrou ou une vis à pas rapide à l'opposé d'une série de boulons nécessitant un temps de démontage assez long par exemple de dix minutes.

La surface 8 latérale a donc une fonction de guidage de la bande sans fin et une fonction de trappe d'accès.

Tout au long du parcours, la surface latérale présentée par la paroi latérale est continue. On peut certes prévoir des interruptions mais celles-ci minimisent l'efficacité du confinement.

Ainsi avec le capot 5, on reconstitue un tube fermé comportant cependant une ouverture à la base. Cette ouverture est située au niveau de l'emplacement des rouleaux horizontaux répartis le long du parcours.

La surface 8 latérale amovible est, de préférence, portée par des moyens 10 de guidage permettant de la déplacer entre deux positions définies à l'avance.

Un verrouillage sera effectué par un verrou simple à activer ou à désactiver.

Ces moyens 10 de guidage sont, dans une première forme de réalisation, aptes à réaliser un guidage en translation, par exemple au moyen d'au moins une coulisse et de son coulisseau.

Selon un autre mode, chaque élément 8 de paroi latérale est fixé par au moins une charnière en sorte d'obtenir un basculement ou une rotation autour d'un axe défini lors du montage.

On a représenté la forme sur une articulation d'axe parallèle à l'axe de déplacement de la bande sans fin.

La charnière est placée à la base de la paroi latérale.

Cette charnière pourrait être d'axe vertical, chaque paroi latérale se comportant comme une porte battante.

Il suffit de basculer le support portant la surface latérale courbe pour dégager l'accès à la bande.

Cet aspect permet très facilement de déplacer une partie de la paroi latérale du convoyeur afin d'accéder à l'intérieur du tube de confinement de la matière.

Egalement, si de la matière s'introduit dans l'espace situé entre la face inférieure de la bande et la face supérieure de la surface latérale courbe, elle s'évacue par l'interstice existant entre le rouleau et la surface latérale courbe.

De préférence, les surfaces 8 latérales seront amovibles en tous points.

Comme on peut le voir sur le dessin, la face active de la surface 8 latérale se compose d'au moins deux plans ou deux courbes formant entre eux une cassure 12 permettant de bloquer la bande dans son déplacement latéral.

En effet, lors de son déplacement, la bande ne se maintient pas rigoureusement dans l'axe de déplacement mais se déplace latéralement. Ainsi, lorsque le bord de la bande heurte la cassure, l'effort pour aller au delà de cette cassure devant augmenter, la bande repart dans l'autre sens par un phénomène de réaction.

Les parois latérales sont réalisées, par exemple en acier.

Au moins la surface active de la surface latérale présente une rugosité faible. Une couche d'un matériau facilitant le glissement peut recouvrir la surface latérale.

Comme on peut le voir le capot est rehaussé pour augmenter le volume du tube et limité la surpression.

Le bord libre 8A de la paroi latérale présentant la surface latérale est solidarisé au capot par un moyen de fixation démontable tel un verrou

Le dispositif de maintien basculant est guidé en rotation autour d'un axe et un verrou réalisé par exemple par un boulon verrouille le support basculant en position active du rouleau en appui sur la bande.

## Revendications

1. Dispositif de maintien d'un rouleau pour convoyeur **caractérisé en ce que** le rouleau (7) est monté sur un support (13) basculant entre deux positions l'une inactive où le rouleau est écarté de la bande du convoyeur et l'autre active où le rouleau est appliqué sur la bande, le support 13 étant maintenu par un verou.

2. Dispositif de maintien selon la revendication 1 **caractérisé en ce que** le support comprend deux joues (13A).

3. Dispositif de maintien selon la revendication 1 **caractérisé en ce que** le support comprend deux entailles(14) pour recevoir l'axe du rouleau.

4. Dispositif de maintien selon la revendication 3 **caractérisé en ce que** les entailles débouchent vers le haut.

5. Dispositif de maintien selon la revendication 3 **caractérisé en ce que** les entailles débouchent vers l'avant.

6. Dispositif de maintien selon la revendication 3 **caractérisé en ce que** les entailles débouchent vers le bas.

7. Dispositif de maintien selon la revendication 1 **caractérisé en ce que** le support porte un dispositif de protection point-rentrant.

8. Convoyeur comprenant au moins un rouleau horizontal **caractérisé en ce qu'**il comprend un dispositif de maintien selon l'une quelconque des revendications 1 à 7.

## Claims

1. Retaining device for a roller for a conveyor, **characterised in that** the roller (7) is mounted on a support (13) which tilts between two positions, one being inactive, in which the roller is moved back from the conveyor belt, and the other being active, in which the roller is applied against the belt, the support being retained by a bolt.

2. Retaining device as claimed in claim 1, **characterised in that** the support has two sides (13A).

3. Retaining device as claimed in claim 1, **characterised in that** the support has two slots (14) for receiving the shaft of the roller.

4. Retaining device as claimed in claim 3, **characterised in that** the slots open towards the top.

5. Retaining device as claimed in claim 3, **characterised in that** the slots open towards the front.

6. Retaining device as claimed in claim 3, **characterised in that** the slots open towards the bottom.

7. Retaining device as claimed in claim 1, **characterised in that** the support bears a protective entry-prevention device.

8. Conveyor incorporating at least one horizontal roller, **characterised in that** it has a retaining device as claimed in any one of claims 1 to 7.

## Patentansprüche

1. Vorrichtung zum Abstützen einer Rolle für einen Förderer, **dadurch gekennzeichnet, dass** die Rolle (7) an einer Halterung (13) zwischen zwei Stellungen kippbar gelagert ist, von denen die eine inaktiv ist, wo die Rolle von dem Band des Förderers beabstandet liegt, und die andere aktiv ist, wo die Rolle an das Band angelegt ist, wobei die Halterung mit einem Riegel gehalten wird.

2. Abstützvorrichtung nach Anspruch 1, **dadurch gekennzeichnet, dass** die. Halterung zwei Seitenwangen (13A) enthält.

3. Abstützvorrichtung nach Anspruch 1, **dadurch gekennzeichnet, dass** die Halterung zwei Einschnitte (14) zum Aufnehmen der Achse der Rolle enthält.

4. Abstützvorrichtung nach Anspruch 3, **dadurch gekennzeichnet, dass** die Einschnitte nach oben münden.

5. Abstützvorrichtung nach Anspruch 3, **dadurch gekennzeichnet, dass** die Einschnitte nach vorne münden.

6. Abstützvorrichtung nach Anspruch 3, **dadurch gekennzeichnet, dass** die Einschnitte nach unten münden.

7. Abstützvorrichtung nach Anspruch 1, **dadurch gekennzeichnet, dass** die Halterung eine Einziehschutzvorrichtung trägt.

8. Förderer mit zumindest einer horizontalen Rolle, **dadurch gekennzeichnet, dass** er eine Abstützvorrichtung nach einem der Ansprüche 1 bis 7 enthält.
